# EUROPÄISCHE PATENTSCHRIFT

(11) **EP 1 707 089 B1**
(45) Veröffentlichungstag und Bekanntmachung des Hinweises auf die Patenterteilung: **02.05.2007**
(21) Anmeldenummer: 06405076.8
(22) Anmeldetag: 22.02.2006
(51) Int. Cl.: A47J 31/42

(54) **Verfahren zum Detektieren des Fehlens von Kaffeebohnen in einem Mahlwerk einer Kaffeemaschine sowie Kaffeemaschine zur Durchführung des Verfahrens**
Process to detect the lack of coffee beans in a grinder of a coffee machine and coffee machine carrying out the process
Procédé pour detecter l'absence de grains de café dans un broyeur d'une machine à café et machine à café pour mettre en oeuvre ledit procédé

(30) Priorität: 29.03.2005 CH 5332005
(43) Veröffentlichungstag der Anmeldung: 04.10.2006
(73) Patentinhaber: Saeco IPR Limited, Dublin 12 (IE)
(72) Erfinder: Keller, Peter, 8494 Bauma (CH)
(74) Vertreter: Rottmann, Maximilian

(56) Entgegenhaltungen:
- EP-A- 0 676 162
- EP-A- 1 440 641
- US-A- 4 007 675
- US-A- 4 789 106

## Beschreibung

Kaffeemaschinen der hier zur Rede stehenden Art dienen der vollautomatischen Zubereitung von frischen Kaffeegetränken. Derartige Kaffeemaschinen verfügen über einen Bohnenbehälter zur Aufnahme von Kaffeebohnen, ein Mahlwerk zum Mahlen der Kaffeebohnen und eine Brüheinheit, der das frische gemahlenen Kaffeepulver zugeführt wird. In der Brüheinheit wird das Kaffeepulver verdichtet und danach vom Brühwasser unter Druck durchströmt und extrahiert. Derartige Kaffeemaschinen werden im allgemeinen Sprachgebrauch auch als Espressokaffeemaschinen bezeichnet.

Eine Problematik bei derartigen Kaffeemaschinen besteht darin, dass das Fehlen von Kaffeebohnen erkannt werden sollte, da ansonsten der Antriebsmotor des Mahlwerks überhitzen kann, wenn dieser leer läuft. Eine weitere Problematik besteht darin, dass nach dem Erkennen des Fehlens von Kaffeebohnen ein Bezug zu der bereits zuvor gemahlenen Kaffeemenge hergestellt werden sollte, damit nach dem Auffüllen der Kaffeebohnen die notwendige Restmenge noch gemahlen werden kann, so dass die zum Aufbrühen eines Kaffees notwendige Gesamtpulvermenge korrekt bemessen werden kann. Ist dies nicht der Fall, muss die bereits gemahlene Menge an Kaffeepulver unverbraucht entsorgt und durch eine neue Charge ersetzt werden.

Das Erkennen des Fehlens von Kaffeebohnen in dem Mahlwerk der Kaffeemaschine mittels herkömmlichen Sensoren ist jedoch problematisch, da diese schnell verschmutzen, zumal die Kaffeebohnen einerseits fetthaltig sind und darüber hinaus beim Mahlen von Kaffeebohnen Kaffeestaub entsteht, der für die meisten Arten von Sensoren problematisch ist.

Dokument EP-1440641 beschreibt ein Verfahren gemäß des Oberbegriffs des Anspruchs 1.

Darüber hinaus ist es bekannt, über die Stromaufnahme des das Mahlwerk antreibenden Elektromotors auf das Vorhandensein bzw. das Fehlen von Kaffeebohnen zu schliessen, da sich aufgrund der Stromaufnahme des Mahlwerks theoretisch auf das Vorhandensein bzw. Fehlen von Kaffeebohnen in dem Mahlwerk schliessen lässt. Ein solches Verfahren hat sich jedoch in der Praxis nur bedingt bewährt, da zwischen dem Antriebsmotor und dem Mahlwerk üblicherweise ein Getriebe angeordnet ist, welches das Erkennen des Fehlens von Kaffeebohnen erschwert, da durch die grosse Untersetzung des Getriebes letztlich nur ein geringer Unterschied in der Stromaufnahme des Elektromotors zwischen Leerlauf und Last liegt. Eine weitere Problematik liegt darin, dass sich gewisse Mahlwerkkomponenten mit der Zeit einlaufen, was dazu führt, dass die Stromaufnahme des Elektromotors während der Einlaufphase kontinuierlich abnimmt, was das Detektieren des Fehlens von Kaffeebohnen zusätzlich erschwert. Schliesslich können auch weitere Parameter wie beispielsweise die Lufttemperatur- und Feuchtigkeit, die Art, Grösse sowie der Röstgrad der zu mahlenden Kaffeebohnen, der eingestellte Mahlgrad sowie alterungsbedingte Veränderungen und Abnutzungen des Mahlwerks einen Einfluss auf die Stromaufnahme des Elektromotors und damit auf die Aussagekraft der Messung haben.

Die Erfindung zielt darauf ab, ein Verfahren zum Detektieren des Fehlens von Kaffeebohnen in einem Mahlwerk einer Kaffeemaschine vorzuschlagen, welches weitgehend unabhängig von sich verändernden oder beeinflussbaren Mahlwerkparametern ist, welches einfach anwendbar ist und eine zuverlässige Aussage bezüglich des Fehlens von Kaffeebohnen ermöglicht.

Hierzu wird nach der Erfindung ein Verfahren gemäss dem Anspruch 1 vorgeschlagen.

Die grundlegende Idee der Erfindung besteht darin, einen vom Mahlwerk während des Betriebs erzeugten Schwingungspegel und/oder ein Schwingungsspektrum zu messen und aufgrund des gemessenen Werts bzw. der gemessenen Werte zu bestimmen, ob sich noch Bohnen im Mahlwerk befinden oder letzteres ggf. leer läuft, was mit dem Fehlen von Kaffeebohnen gleichzusetzen ist. Jedenfalls hat sich gezeigt, dass es sowohl aufgrund des gemessenen Schwingungspegels wie auch des Schwingungsspektrums grundsätzlich möglich ist, zu bestimmen, ob sich noch Kaffeebohnen im Mahlwerk befinden oder nicht.

Bevorzugte Weiterbildungen des Verfahrens sind in den abhängigen Ansprüchen 2 bis 7 umschrieben.

So wird bei einem bevorzugten Ausführungsbeispiel vorgeschlagen, den Schwingungspegel zu messen und bei Veränderung um einen vorbestimmten Wert und/oder bei Unterschreiten eines vorbestimmten Werts auf ein Fehlen von Bohnen zu erkennen. Damit kann man sich insbesondere die Tatsache zu Nutze machen, dass der Schwingungspegel beim Mahlen von Kaffeebohnen wesentlich höher ist als im Leerlauf.

Die Erfindung befasst sich im weiteren mit einer Kaffeemaschine zum Durchführen des Verfahrens, wobei die zum Detektieren des Fehlens von Kaffeebohnen in dem Mahlwerk notwendigen Mittel kostengünstig realisierbar und einfach in der Anwendung sein sollen.

Hierzu wird eine Kaffeemaschine gemäss dem Anspruch 8 vorgeschlagen.

Bevorzugte Weiterbildungen der Kaffeemaschine sind in den abhängigen Ansprüchen 9 bis 12 umschrieben.

Ein bevorzugtes Ausführungsbeispiel der Erfindung wird nachfolgend anhand einer Zeichnung näher erläutert, in welcher eine Kaffeemaschine schematisch dargestellt ist.

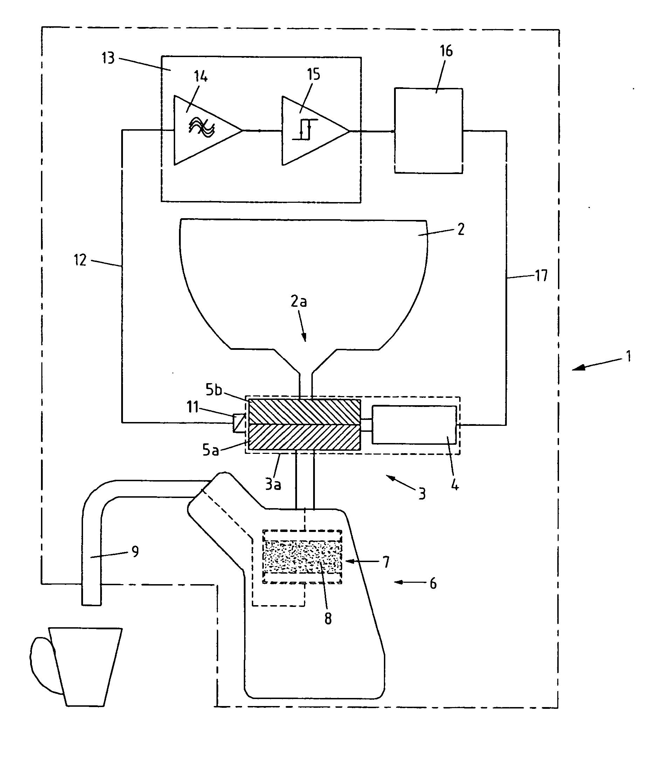

Die in der Zeichnung schematisch dargestellte Kaffeemaschine 1 besteht im wesentlichen aus einem Bohnenbehälter 2, einem Mahlwerk 3, einem Brühmodul 6, einem Auslass 9, einem Sensor 11, einer elektronischen Erfassungs- und Auswerleeinheit 13 sowie einer elektronischen Steuereinheit 16. Das Mahlwerk 3 besteht aus einem Elektromotor 4, der über ein Untersetzungsgetriebe (nicht dargestellt) zumindest eine von zwei Mahlscheiben 5a, 5b antreibt. Das Mahlwerk 3 ist unterhalb des Bohnenbehälters 2 angeordnet und über einen Durchlass 2a mit dem Bohnenbehälter 2 verbunden. Am Gehäuse 3a des Mahlwerks 3 ist ein Sensor 11 angeordnet, der über eine Leitung 12 mit der elektronischen Erfassungseinheit 13 verbunden ist. Die elektronische Erfassungseinheit 13 ihrerseits ist mit der elektronischen Steuereinheit 16 verbunden, welch letztere über eine Steuerleitung 17 mit dem Mahlwerk 3 in Verbindung steht.

Das Brühmodul 6 ist mit einer Brühkammer 7 versehen, die dem Extrahieren des mittels des Mahlwerks gemahlenen Kaffees bzw. Kaffeepulvers 8 dient. Das in der Brühkammer 7 aufgenommene Kaffeepulver 8 wird mittels eines nicht näher dargestellten Kolbens verdichtet und danach von dem unter Druck stehenden Brühwasser extrahiert. Das in dem Brühmodul 6 zubereitete Kaffeegetränk kann über den Auslass 9 in eine bereitgestellte Kaffeetasse einströmen.

Von den beiden Mahlscheiben 5a, 5b wird vorzugsweise nur die eine Mahlscheibe 5a von dem Elektromotor 4 angetrieben, während die andere Mahlscheibe 5b drehfest angeordnet ist. Der Sensor 11 ist zur Aufnahme eines vom Mahlwerk 3 während des Betriebs erzeugten Schwingungspegels und/oder Schwingungsspektrums vorgesehen. Mit der vorliegenden Erfindung macht man sich die Tatsache zu Nutze, dass das Mahlwerk 3 während des Betriebs Schwingungen erzeugt, deren Spektrum und insbesondere Pegel sich markant verändert, wenn im Mahlwerk 3 Bohnen gemahlen werden bzw. wenn sich keine Bohnen mehr im Mahlwerk 3 befinden und das Mahlwerk leer läuft.

Zum Erfassen der Schwingungen hat es sich als vorteilhaft erwiesen, den Sensor 11 am Gehäuse 3a oder an einem Gehäuseteil des Mahlwerks 3 anzuordnen. Mit einem derart angeordneten Sensor 11 können die Schwingungen des durch das Mahlwerk 3 angeregten Gehäuses 3a erfasst und mittels der nachfolgenden Erfassungs- und Auswerteeinheit 13 elektronisch ausgewertet werden. Die Erfassungs- und Auswerteeinheit 13 umfasst dazu eine mit einem Tiefpassfilter versehene Filter-Verstärkereinheit 14 sowie einen Schwellwertschalter 15. Der Schwellwertschalter 15 kann beispielsweise als Komparator ausgebildet sein, der den gemessenen Wert mit einem Sollwert vergleicht und bei Über- bzw. Unterschreiten des Sollwerts ein entsprechendes Signal an die elektronische Steuereinheit 16 weiterleitet. Soll aufgrund des gemessenen Schwingungspegels eine Entscheidung in Bezug auf Bohnen vorhanden bzw. Bohnenmangel getroffen werden, so ist die Filter-Verstärkereinheit 14 vorzugsweise derart ausgebildet, dass kurzfristige, peakartige Pegel-Änderungen noch nicht als Bohnenmangel detektiert werden. Messungen an bestehenden Mahlwerken haben ergeben, dass der Schwingungspegel des Mahlwerkgehäuses 3a, je nach den gegebenen Randbedingungen, um den Faktor 2 bis 40 unterschiedlich ist, wenn mit dem Mahlwerk Bohnen gemahlen werden bzw. wenn das Mahlwerk leer läuft. Namentlich ist der Schwingungspegel unter Last, d.h. beim Mahlen von Bohnen, mindestens doppelt so hoch, wie wenn das Mahlwerk 3 leer läuft. Bei Verwendung eines Piezo-elektrischen Aufnehmers, der direkt am Mahlwerkgehäuse 3a befestigt wurde, wurden Unterschiede im Schwingungspegel zwischen dem Mahlen von Bohnen bzw. dem Leerlauf um bis zu Faktor fünfzehn detektiert. Durch Setzen eines zweiten Schwellwerts kann zudem ein Blockieren des Mahlwerks erkannt werden.

Sobald die elektronische Erfassungs- und Auswerteeinheit 13 einen Bohnenmangel erkennt, wird ein entsprechendes Signal an die elektronische Steuereinheit 16 weitergeleitet, welche ihrerseits den Elektromotor 4 stoppt. Zugleich wird an einem Display (nicht dargestellt) darauf hingewiesen, dass der Bohnenbehälter 2 leer ist.

Anstelle des Erfassens und Auswertens des Schwingungspegels kann auch das Schwingungsspektrum des durch das Mahlwerk 3 angeregten Gehäuses 3a erfasst und mittels der nachfolgenden Erfassungs- und Auswerteeinheit 13 elektronisch ausgewertet werden. Diesbezügliche Versuche haben ergeben, dass sich das Schwingungsspektrum bzw. die Schwingungsfrequenz des Mahlwerkgehäuses zwischen Last und im Leerlauf ebenfalls markant verändert, indem diese(s) im Leerlauf um ca. 50% tiefer liegt. Natürlich können auch beide Grössen, namentlich der Schwingungspegel und das Schwingungsspektrum zum Detektieren des Fehlens von Kaffeebohnen in dem Mahlwerk herangezogen werden.

Anstelle eines piezo-elektrischen Sensors kann beispielsweise auch ein induktiver- oder kapazitiver Sensor eingesetzt werden. Auch das Anbringen eines oder mehrerer Dehnmessstreifen(s) zur Bildung eines Sensors ist möglich. Eine weitere Variante besteht in der Verwendung eines Luftschall- oder Körperschallmikrofons.

Vorzugsweise wird die Schwingung des Mahlgehäuses bzw. eines entsprechenden Elements nur während des eigentlichen Mahlvorgangs erfasst und ausgewertet. Indem deteketiert oder gemessen wird, welche Bohnenmenge vor dem Stoppen des Mahlwerks, d.h. von Beginn des Mahlvorgangs bis zu dem Moment, in dem erkannt wird, dass das Mahlwerk leer läuft, gemahlen wurde, kann der der Mahlvorgang nach dem Auffüllen von Kaffeebohnen danach bis zum Erreichen der gewünschten Kaffee- bzw. Pulvermenge fortgesetzt werden. Dies hat den Vorteil, dass die bereits gemahlene Menge an Katteepulver zum Aufbrühen des folgenden Kaffees verwendet werden kann. Das Erfassen der vor dem Stoppen des Mahlvorgangs gemahlenen Menge an Kaffee kann beispielsweise über das Messen der Anzahl Umdrehungen, welche das Mahlwerk bis dahin ausgeführt hat, erfolgen.

Das Erfassen und Auswerten der Gehäuseschwingungen wird vorzugsweise mit dem Mahlvorgang gestartet und mit Beendigung desselben bzw. kurz davor wieder gestoppt.

Das erfindungsgemässe Verfahren und die erfindungsgemässe Vorrichtung lassen folgende Vorteile erkennen:
- kostengünstig und einfach realisierbar;
- schnelles Erkennen des Bohnenmangels;
- kein Einlaufen des Mahlwerks notwendig;
- mahlwerkunabhängig einsetzbar;
- alterungsbedingte Veränderungen des Mahlwerks haben keinen nennenswerten Einfluss auf das Messergebnis;
- weitgehend temperaturunabhängig;
- weitgehend reibungsunabhängig;
- weitgehend unabhängig von der Grösse, Art und dem Röstgrad der zu mahlenden Kaffeebohnen;
- weitgehend unabhängig von der Luftfeuchte;
- galvanische Trennung zwischen Aufnehmer und Mahlwerk;
- der Mahlvorgang kann nach dem Auffüllen von Bohnen bis zu der gewünschten Menge an gemahlenem Kaffee fortgesetzt werden.

## Patentansprüche

1. Verfahren zum Detektieren des Fehlens von Kaffeebohnen in einem Mahlwerk (3) einer Kaffeemaschine (1), **dadurch gekennzeichnet, dass** der Pegel und/oder das Spektrum einer durch das Mahlwerk (3) während des Betriebs erzeugten Schwingung gemessen und zur Bestimmung des Entscheids, ob Kaffeebohnen vorhanden sind oder nicht, herangezogen wird.

2. Verfahren nach Anspruch 1, **dadurch gekennzeichnet, dass** nach dem Erkennen des Fehlens von Kaffeebohnen der Mahlvorgang unterbrochen wird.

3. Verfahren nach Anspruch 1 oder 2, **dadurch gekennzeichnet, dass** die Zeitspanne vom Beginn des Mahlvorgangs bis zum Erkennen des Fehlens von Kaffeebohnen im Mahlwerk (3) gemessen und der Mahlvorgang nach dem Auffüllen von Kaffeebohnen fortgesetzt wird.

4. Verfahren nach einem der vorhergehenden Ansprüche, **dadurch gekennzeichnet, dass** zum Erkennen des Fehlens von Kaffeebohnen der gemessene Wert mit einem Sollwert verglichen wird.

5. Verfahren nach einem der vorhergehenden Ansprüche, **dadurch gekennzeichnet, dass** der Schwingungspegel gemessen und bei Veränderung um einen vorbestimmten Wert und/oder bei Unterschreiten eines vorbestimmten Werts auf ein Fehlen von Bohnen erkannt wird.

6. Verfahren nach einem der vorhergehenden Ansprüche, **dadurch gekennzeichnet, dass** das Schwingungsspektrum gemessen und bei Veränderung um einen vorbestimmten Wert und/oder bei Erreichen eines vorbestimmten Werts auf ein Fehlen von Kaffeebohnen im Mahlwerk (3) erkannt wird.

7. Verfahren nach einem der vorhergehenden Ansprüche, **dadurch gekennzeichnet, dass** der Schwingungspegel des Mahlwerkgehäuses (3a) oder eines mit dem Mahlwerk (3) verbundenen Elements und/oder das Schallspektrum des Mahlwerkgehäuses (3a) oder eines mit dem Mahlwerk (3) in Verbindung stehenden Bauteils gemessen wird.

8. Kaffeemaschine (1) zur Durchführungen des Verfahrens nach einem der vorhergehenden Ansprüche, mit zumindest einem Bohnenbehälter (2) zur Aufnahme von Kaffeebohnen, einem Mahlwerk (3) zum Mahlen der Kaffeebohnen, sowie einem mit einer Brühkammer (13) versehenen Brühmodul (12) zum Extrahieren der gemahlenen Kaffeebohnen mittels Brühwasser, **dadurch gekennzeichnet, dass** die Kaffeemaschine (1) mit zumindest einem Sensor (11) zum Erfassen des Pegels und/oder des Spektrums einer durch das Mahlwerk (3) während des Betriebs erzeugten Schwingung versehen ist.

9. Kaffeemaschine (1) nach Anspruch 8, **dadurch gekennzeichnet, dass** die Kaffeemaschine (1) eine mit dem Sensor (11) verbundene, elektronische Erfassungs- und Auswerteeinheit (13) zum Erfassen und Auswerten des am Sensor (11) während des Mahlvorgangs anstehenden Signals umfasst.

10. Kaffeemaschine (1) nach Anspruch 9, **dadurch gekennzeichnet, dass** die elektronische Erfassungs- und Auswerteeinheit (13) mit einer elektronischen Steuereinheit (16) verbunden ist, welche das Mahlwerk (3) in Abhängigkeit des am Sensor (11) anstehenden Signals ggf. stoppt.

11. Kaffeemaschine (1) nach einem der Ansprüche 8 bis 10, **dadurch gekennzeichnet, dass** das Mahlwerk (3) mit einem Gehäuse (3a) versehen ist, und dass der Sensor (11) an dem Gehäuse (3) oder einem mit dem Gehäuse (3a) verbundenen Bauteil angeordnet ist.

12. Kaffeemaschine (1) nach einem der Ansprüche 8 bis 11, **dadurch gekennzeichnet, dass** zum Erfassen des Pegels und/oder des Spektrums einer durch das Mahlwerk (3) während des Betriebs erzeugten Schwingung ein piezo-elektrischer-, ein kapazitiver- oder ein induktiver-Sensor oder ein Luftschall- oder Körperschallmikrofon eingesetzt wird.

## Claims

1. Method for detecting the lack of coffee beans in a grinder (3) of a coffee machine (1), **characterized in that** the level and/or the spectrum of vibration generated by the grinder (3) during operation are/is measured and used to make the decision as to whether coffee beans are present or not.

2. Method according to Claim 1, **characterized in that** the grinding process is interrupted after the lack of coffee beans is identified.

3. Method according to Claim 1 or 2, **characterized in that** the time period from the beginning of the grinding process up until the lack of coffee beans in the grinder (3) is identified is measured, and the grinding process is continued after coffee beans have been replenished.

4. Method according to one of the preceding claims, **characterized in that** the measured value is compared with a setpoint value in order to identify the lack of coffee beans.

5. Method according to one of the preceding claims, **characterized in that** the vibration level is measured and a lack of beans is identified when the said level changes by a predetermined value and/or when the said level falls below a predetermined value.

6. Method according to one of the preceding claims, **characterized in that** the vibration spectrum is measured and a lack of coffee beans in the grinder (3) is identified when the said spectrum changes by a predetermined value and/or when a predetermined value is reached.

7. Method according to one of the preceding claims, **characterized in that** the vibration level of the grinder housing (3a) or of an element which is connected to the grinder (3) and/or the sound spectrum of the grinder housing (3a) or of a component which is connected to the grinder (3) are/is measured.

8. Coffee machine (1) for carrying out the method according to one of the preceding claims, comprising at least one bean container (2) for holding coffee beans, a grinder (3) for grinding the coffee beans, and a brewing module (12), which is provided with a brewing chamber (13), for extracting the ground coffee beans using brewing water, **characterized in that** the coffee machine (1) is provided with at least one sensor (11) for detecting the level and/or the spectrum of vibration generated by the grinder (3) during operation.

9. Coffee machine (1) according to Claim 8, **characterized in that** the coffee machine (1) comprises an electronic detection and evaluation unit (13), which is connected to the sensor (11), for detecting and evaluating the signal which is produced at the sensor (11) during the grinding process.

10. Coffee machine (1) according to Claim 9, **characterized in that** the electronic detection and evaluation unit (13) is connected to an electronic control unit (16) which optionally stops the grinder (3) as a function of the signal which is produced at the sensor (11).

11. Coffee machine (1) according to one of Claims 8 to 10, **characterized in that** the grinder (3) is provided with a housing (3a), and **in that** the sensor (11) is arranged on the housing (3a) or on a component which is connected to the housing (3a).

12. Coffee machine (1) according to one of Claims 8 to 11, **characterized in that** a piezoelectric, a capacitive or an inductive sensor or a microphone for air-borne sound or for structure-borne sound is used in order to detect the level and/or the spectrum of vibration generated by the grinder (3) during operation.

## Revendications

1. Procédé de détection du manque de fèves de café dans un moulin (3) d'une machine à café (1), **caractérisé en ce que** le niveau et/ou le spectre des oscillations produites en service par le moulin (3) est mesuré et sert à déterminer s'il reste des fèves de café ou non.

2. Procédé suivant la revendication 1, **caractérisé en ce que** le processus de mouture est interrompu après que le manque de fèves de café a été reconnu.

3. Procédé suivant la revendication 1 ou 2, **caractérisé en ce que** le laps de temps depuis le début du processus de mouture jusqu'à la reconnaissance d'un manque de fèves de café dans le moulin (3) est mesuré et que le processus de mouture est poursuivi après le remplissage du réservoir à fèves de café.

4. Procédé suivant une des revendications précédentes, **caractérisé en ce que** pour la reconnaissance d'un manque de fèves de café, la valeur mesurée est comparée à une valeur de seuil.

5. Procédé suivant une des revendications précédentes, **caractérisé en ce que** le niveau des oscillations est mesuré et qu'en cas de modification de l'ordre d'une valeur prédéterminée et/ou en cas de dépassement vers le bas d'une valeur prédéterminée, le manque de fèves est reconnu.

6. Procédé suivant une des revendications précédentes, **caractérisé en ce que** le spectre des oscillations est mesuré et qu'en cas de modification de l'ordre d'une valeur prédéterminée et/ou en cas d'atteinte d'une valeur prédéterminée, le manque de fèves est reconnu.

7. Procédé suivant une des revendications précédentes, **caractérisé en ce que** le niveau des oscillations du boîtier (3a) du moulin ou d'un élément relié au moulin (3) et/ou le spectre acoustique du boîtier (3a) du moulin ou d'un composant relié au moulin (3) sont mesurés.

8. Machines à café (1) servant à l'exécution du procédé suivant une des revendications précédentes comprenant au moins un réservoir à fèves de café (2) destiné à recevoir des fèves de café, un moulin (3) servant à moudre les fèves de café, ainsi qu'un module d'extraction (12) pourvu d'une chambre d'extraction (13) servant à extraire les fèves de café au moyen d'eau bouillante, **caractérisée en ce que** la machine à café (1) est pourvue au moins d'un capteur (11) servant à reconnaître le niveau des oscillations et/ou le spectre des oscillations produites en service par le moulin (3).

9. Machine à café (1) suivant la revendication 8, **caractérisée en ce que** la machine à café (1) comprend une unité de reconnaissance et d'évaluation électronique, qui sert à reconnaître et à évaluer le signal existant au capteur (11) pendant le processus de mouture et qui est reliée au capteur (11).

10. Machine à café (1) suivant la revendication 9, **caractérisée en ce que** l'unité de reconnaissance et d'évaluation électronique (13) est reliée à une unité de commande électronique (16), qui arrête le moulin (3), le cas échéant, en fonction du signal existant au capteur (11).

11. Machine à café (1) suivant une des revendications 8 à 10, **caractérisée en ce que** le moulin (3) est pourvu d'un boîtier (3a) et que le capteur (11) est disposé sur le boîtier (3) ou sur un composant relié au boîtier (3a).

12. Machine à café (1) suivant une des revendications 8 à 11, **caractérisée en ce qu'**un capteur piézo-électrique, capacitif ou inductif ou un microphone de bruit aérien ou de bruits transmis par les corps solides est utilisé pour capter le niveau et/ou le spectre des oscillations produites en service par le moulin (3).
